# EUROPÄISCHE PATENTSCHRIFT

(11) **EP 3 394 660 B1**
(45) Veröffentlichungstag und Bekanntmachung des Hinweises auf die Patenterteilung: **13.05.2020**
(21) Anmeldenummer: 16709705.4
(22) Anmeldetag: 12.03.2016
(51) Int. Cl.: G02B 27/01, G06T 19/00, G06F 3/01, G02B 27/00

(54) **VERFAHREN ZUM BETREIBEN EINES VIRTUAL-REALITY-SYSTEMS UND VIRTUAL-REALITY-SYSTEM**
METHOD FOR OPERATING A VIRTUAL REALITY SYSTEM, AND VIRTUAL REALITY SYSTEM
PROCÉDÉ DE FONCTIONNEMENT D'UN SYSTÈME DE RÉALITÉ VIRTUELLE ET SYSTÈME DE RÉALITÉ VIRTUELLE ASSOCIÉ

(30) Priorität: 22.12.2015 DE 102015226581
(43) Veröffentlichungstag der Anmeldung: 31.10.2018
(73) Patentinhaber: Audi AG, 85045 Ingolstadt (DE)
(72) Erfinder: KÜHNE, Marcus, 92339 Beilngries (DE)
(86) Internationale Anmeldenummer: PCT/EP2016/000447
(87) Internationale Veröffentlichungsnummer: WO 2017/108144

(56) Entgegenhaltungen:
- DE-A1- 10 137 841
- US-A1- 2013 147 686
- Marlon Matthäus: "Audi VR experience - Dimensionssprung", Audi Blog, 9. Februar 2015 (2015-02-09), XP055268555, Gefunden im Internet: URL:http://blog.audi.de/2015/02/09/dimensi onssprung/#!prettyPhoto [gefunden am 2016-04-26]

## Beschreibung

Die Erfindung betrifft ein Verfahren zum Betreiben eines Virtual-Reality-Systems und ein Virtual-Reality-System.

Mittels eines Virtual-Reality-Systems kann eine virtuelle Realität dargestellt werden, wobei als virtuelle Realität üblicherweise die Darstellung und gleichzeitige Wahrnehmung der Wirklichkeit in ihren physikalischen Eigenschaften in einer in Echtzeit computergenerierten, interaktiven virtuellen Umgebung bezeichnet wird.

Virtual-Reality-Systeme können eine Virtual-Reality-Brille zum Anzeigen einer virtuellen Umgebung aufweisen. Bei einer Virtual-Reality-Brille handelt es sich um eine bestimmte Form eines sogenannten Head-Mounted-Displays, bei welchem es sich um ein auf dem Kopf getragenes visuelles Ausgabegerät handelt. Es präsentiert Bilder auf einem augennahen Bildschirm oder projiziert sie direkt auf die Netzhaut. Eine Virtual-Reality-Brille hat dabei zusätzlich noch Sensoren zur Bewegungserfassung des Kopfes. Damit kann die Anzeige einer berechneten Grafik an die Bewegungen eines Träger der Virtual-Reality-Brille angepasst werden. Durch die körperliche Nähe wirken die angezeigten Bildflächen von Head-Mounted-Displays erheblich größer als die freistehender Bildschirme und decken im Extremfall sogar das gesamte Sichtfeld des Benutzers ab. Da jeweilige Displays von Virtual-Reality-Brillen durch die Kopfhaltung allen Kopfbewegungen eines Trägers folgen, bekommt er das Gefühl, sich direkt in einer von einem Computer erzeugten Bildlandschaft zu bewegen.

Mittels einer Virtual-Reality-Brille können beispielsweise verschiedene virtuelle Fahrzeugmodelle angezeigt werden. Die realitätsnahe Darstellung von virtuellen Objekten, wie zum Beispiel virtuellen Kraftfahrzeugen, stellt eine besondere Herausforderung dar.

Eine Präsentation von Charles Murray vom 05.Mai 2015, gefunden auf URL: https://www.youtube.com/watch?v=grhFOU_mlHw, zeigt ein Virtual-Reality-System von Ford, bei welchem ein Kraftfahrzeug in einer virtuellen Realität in einer Außen- und einer Innenansicht gezeigt wird.

Ferner offenbart die DE 101 37 841 A1 ein System zur subjektiven Bewertung eines Fahrzeugdesigns innerhalb einer virtuellen Umgebung unter Anwendung einer virtuellen Realität. Das System umfasst eine für das Fahrzeugdesign charakteristische skalierbare Eigenschaft, wobei die physikalische Eigenschaft entsprechend einem Skalierungsverhältnis für einen Bewerter des Fahrzeugdesigns justiert wird. ferner umfasst das System ein Computersystem zur digitalen Schaffung einer virtuellen Umgebung mit einem im Innenraum virtuellen Menschen, wobei die virtuelle Umgebung ein Fahrzeugdesign umfasst und der virtuelle Mensch virtuell einen skalierten Bewerter darstellt. Weiter umfasst das System ein Bewegungserfassungssystem zum Erfassen einer Bewegung des Bewerters und zur Übermittlung der erfassten Bewegung des Bewerters an das Computersystem, so dass die Bewegung des Bewerters die Bewegung des virtuellen Menschen in der virtuellen Umgebung steuert. Ferner umfasst das System eine operativ mit dem Computersystem kommunizierende Anzeigevorrichtung der virtuellen Realität, so dass der Bewerter während der Bewertung des Fahrzeugdesigns die virtuelle Umgebung sehen kann.

Des Weiteren ist aus der "Audi VR experience -Dimensionssprung" von Marlon Matthäus ein Verfahren zum Betreiben eines Virtual-Reality-Systems bekannt, bei welchem mittels einer von einer Person aufgesetzten Virtual-Reality-Brille ein virtuelles Kraftfahrzeug in einer Innen- und Außenansicht angezeigt wird. Eine kleine Kamera verfolgt dabei die Kopfbewegungen des Trägers der Virtual-Reality-Brille und passt die Bilddarstellung der Brille entsprechend an. Des Weiteren verfolgt die Kamera die Kopfbewegungen derart, dass ein dargestelltes Bild verzögerungsfrei entsprechend den Bewegungen dargestellt werden kann.

Es ist die Aufgabe der vorliegenden Erfindung, ein Verfahren zum Betreiben eines Virtual-Reality-Systems sowie ein Virtual-Reality-System bereitzustellen, mittels welchen eine besonders realitätsnahe Darstellung eine virtuellen Kraftfahrzeugs erzielt werden kann.

Diese Aufgabe wird durch ein Verfahren zum Betreiben eines Virtual-Reality-Systems sowie durch ein Virtual-Reality-System mit den Merkmalen der unabhängigen Patentansprüche gelöst. Vorteilhafte Ausgestaltungen mit zweckmäßigen und nicht trivialen Weiterbildungen der Erfindung sind in den abhängigen Ansprüchen angegeben.

Bei dem erfindungsgemäßen Verfahren zum Betreiben eines Virtual-Reality-Systems wird mittels einer von einer Person aufgesetzten Virtual-Reality-Brille ein virtuelles Kraftfahrzeug aus einer virtuellen Beobachtungsposition angezeigt. Falls das virtuelle Kraftfahrzeug in einer Innenansicht angezeigt wird, wird eine Höhe der virtuellen Beobachtungsposition in Abhängigkeit von einer mittels einer Erfassungseinrichtung erfassten Höhenposition der Virtual-Reality-Brille und in Abhängigkeit vom Fahrzeugmodell des angezeigten virtuellen Kraftfahrzeugs vorgegeben. Falls das virtuelle Kraftfahrzeug in einer Außenansicht angezeigt wird, wird die Höhe der virtuellen Beobachtungsposition in Abhängigkeit von der erfassten Höhenposition der Virtual-Reality-Brille und unabhängig vom Fahrzeugmodell vorgegeben.

Es ist vorgesehen, dass das virtuelle Kraftfahrzeug in der Innenansicht angezeigt wird, solange erfasst wird, dass die Person auf der Sitzgelegenheit sitzt, und ein Wechsel von der Innenansicht zur Außenansicht mittels der Virtual-Reality-Brille durchgeführt wird, sobald erfasst wird, dass die Person nicht mehr auf der Sitzgelegenheit sitzt, so dass nach dem Wechsel das virtuelle Kraftfahrzeug in der Außenansicht angezeigt wird. Vorzugsweise wird beim Wechsel von der Innenansicht zur Außenansicht die Innenansicht graduell ausgeblendet und anschließend die Außenansicht graduell eingeblendet. Dies ist insbesondere vorteilhaft vor dem Hintergrund, dass sich beim Wechsel von der Innenansicht zur Außenansicht die Höhe der virtuellen Beobachtungsposition ändern kann, insbesondere weil in der Außenansicht vorzugsweise nur noch die erfasste Höhenposition der Virtual-Reality-Brille bei der Vorgabe der Höhe der virtuellen Beobachtungsposition berücksichtigt wird. Ferner wird verhindert, dass die Person, welche die Virtual-Reality-Brille aufgesetzt hat, sich virtuell beispielsweise am Dachhimmel des gerade angezeigten virtuellen Kraftfahrzeugs stößt, da sobald die Person sich von der Sitzgelegenheit erhebt, das virtuelle Kraftfahrzeug nicht mehr in der Innenansicht sondern stattdessen in der Außenansicht angezeigt wird.

Ferner ist es vorgesehen, dass mittels einer an oder in der Sitzgelegenheit angeordneten Sitzbelegungssensorik erfasst wird, ob die Person auf der Sitzgelegenheit sitzt. Dadurch kann auf einfache Weise festgestellt werden, ob die Person gerade auf der Sitzgelegenheit sitzt oder nicht, so dass die Virtual-Reality-Brille entsprechend den von der Sitzbelegungssensorik bereitgestellten Signalen angesteuert werden kann, um das virtuelle Kraftfahrzeug entweder in der Innenansicht oder in der Außenansicht anzuzeigen.

Unter der Höhe der virtuellen Beobachtungsposition ist die vertikale Lage der virtuellen Beobachtungsposition innerhalb einer mittels der Virtual-Reality-Brille angezeigten virtuellen Umgebung zu verstehen, innerhalb welcher das angezeigte virtuelle Kraftfahrzeug angeordnet ist. Beispielsweise kann die virtuelle Beobachtungsposition in einem kartesischen Koordinatensystem angegeben werden, wobei die Höhe in dem Fall dann mit einem Wert für eine vertikale Achse des Koordinatensystems angegeben werden kann.

Die Anzeige der virtuellen Umgebung und dem darin angeordneten virtuellen Kraftfahrzeug erfolgt so, als ob die die Virtual-Reality-Brille tragende Person beispielsweise auf einer virtuellen Begehungsfläche der angezeigten Umgebung stehen würde, wenn das virtuelle Kraftfahrzeug in der Außenansicht angezeigt wird. Die Anzeige der virtuellen Umgebung und dem darin angeordneten virtuellen Kraftfahrzeug erfolgt so, als ob die die Virtual-Reality-Brille tragende Person beispielsweise auf einem Fahrersitz des angezeigten virtuellen Kraftfahrzeugs sitzen würde, wenn das virtuelle Kraftfahrzeug in der Innenansicht angezeigt wird.

Mittels des erfindungsgemäßen Verfahrens ist es möglich, ein virtuelles Kraftfahrzeug, insbesondere in einer Innenansicht, besonders realistisch darzustellen. Denn in der Innenansicht wird nicht nur die Höhenposition der von der Person aufgesetzten Virtual-Reality-Brille, und somit auch die Höhenposition der Augen des Trägers der Virtual-Reality-Brille, sondern auch das gerade angezeigte Fahrzeugmodell berücksichtigt. Der Erfindung liegt die Erkenntnis zugrunde, dass unterschiedliche Fahrzeugmodelle unterschiedlich hoch sein können. Beispielsweise sitzt man in einem Sportwagen üblicherweise relativ tief, wobei man beispielsweise in einem Geländewagen eine sehr hohe Sitzposition hat. Die Höhe der virtuellen Beobachtungsposition, aus welcher der Träger der Virtual-Reality-Brille das virtuelle Kraftfahrzeug in der Innenansicht betrachten kann, wird also fahrzeugspezifisch - je nach angezeigtem Fahrzeugmodell - angepasst. Sollte der Träger der Virtual-Reality-Brille also virtuell in einem Innenraum eines sehr niedrigen Fahrzeugs sitzen, so wird die virtuelle Sitzhöhe an die niedrige Sitzposition des betreffenden Fahrzeugs angepasst. Sollte der Träger der Virtual-Reality-Brille hingegen virtuell in einem sehr hohen Fahrzeug sitzen, beispielsweise in einem sehr großen Geländewagen, so wird die virtuelle Sitzhöhe wesentlich höher gewählt als dies der Fall ist, wenn der Träger der Virtual-Reality-Brille in einem sehr niedrigen Sportwagen sitzen sollte.

Sollte beispielsweise während der Anzeige des virtuellen Kraftfahrzeugs in einer Innenansicht das Fahrzeugmodell gewechselt werden, so wird automatisch die Höhe der virtuellen Beobachtungsposition an den Wechsel des Fahrzeugmodells angepasst. Sollte der Träger der Virtual-Reality-Brille beispielsweise zunächst in einem virtuellen Geländewagen sitzen und anschließend ebenfalls in der Innenansicht einen virtuellen Sportwagen angezeigt bekommen, so wird durch die Anpassung der Höhe der virtuellen Beobachtungsposition beispielsweise ein Bodenbereich des betreffenden virtuellen Kraftfahrzeugs angehoben, so dass die virtuelle Sitzsituation im Sportwagen besonders glaubwürdig und realistisch angezeigt wird. Im virtuellen Sportwagen sitzt der Träger der Virtual-Reality-Brille somit wesentlich tiefer als im virtuellen Geländewagen. So werden beispielsweise jeweilige Fahrpedale entsprechend der an das jeweilige Fahrzeugmodell angepassten Höhe der virtuellen Beobachtungsposition in vertikaler Richtung weiter weg oder näher für den Träger der Virtual-Reality-Brille angezeigt. Gleiches gilt zum Beispiel für den Fall, dass der Träger der Virtual-Reality-Brille in der Innensicht aus dem virtuellen Kraftfahrzeug nach außen - also in die angezeigte virtuelle Fahrzeugumgebung - blickt. Je nach gerade angezeigtem Fahrzeugmodell blickt er von weiter oben oder von weiter unter auf die virtuelle Fahrzeugumgebung. Mittels des erfindungsgemäßen Verfahrens ist es also möglich, ein virtuelles Kraftfahrzeug in einer Innenansicht besonders realitätsnah darzustellen.

Sobald das virtuelle Kraftfahrzeug in einer Außenansicht angezeigt wird, ist vorzugsweise ausschließlich die erfasste Höhenposition der Virtual-Reality-Brille ausschlaggebend, so dass beispielsweise eine besonders groß gewachsene Person entsprechend virtuell von weiter oben von außen auf das virtuelle Kraftfahrzeug blickt als dies beispielsweise eine besonders klein gewachsene Person tun würde. In der Außenansicht wird somit ebenfalls eine besonders realitätsnahe, da an die Größe des Trägers der Virtual-Reality-Brille angepasste, Anzeige des virtuellen Kraftfahrzeugs ermöglicht. Eine vorteilhafte Ausführungsform der Erfindung sieht vor, dass die Höhe der virtuellen Beobachtungsposition, aus welcher das virtuelle Kraftfahrzeug in der Innenansicht angezeigt wird, vorgegeben wird, indem zur erfassten Höhenposition der Virtual-Reality-Brille ein in Abhängigkeit vom augenblicklich angezeigten virtuellen Kraftfahrzeug vorgegebener Wert für einen Höhenversatz hinzuaddiert wird. Beispielsweise können in einem Speichermedium des Virtual-Reality-Systems verschiedenste Fahrzeugmodelle hinterlegt sein, wobei für die jeweiligen Fahrzeugmodelle jeweilige Werte für den besagten Höhenversatz abgespeichert sind. Je nachdem, welches der Fahrzeugmodelle gerade in einer Innenansicht mittels der Virtual-Reality-Brille angezeigt wird, wird der entsprechend hinterlegte Höhenversatz ausgewählt und zur erfassten Höhenposition der Virtual-Reality-Brille hinzuaddiert. Bei diesem Höhenversatz kann es sich dabei sowohl um einen positiven als auch um einen negativen Wert handeln. Die Höhe der virtuellen Beobachtungsposition ergibt sich also mit anderen Worten als Summe aus der erfassten Höhenposition der Virtual-Reality-Brille und dem hinzuaddierten Höhenversatz. Dadurch kann auf besonders einfache Weise eine fahrzeugmodellspezifische Anpassung der Höhe der virtuellen Beobachtungsposition beim Anzeigen des betreffenden virtuellen Kraftfahrzeugs in der Innenansicht erzielt werden.

Eine weitere vorteilhafte Ausführungsform der Erfindung sieht vor, dass der Wert für den Höhenversatz vorgegeben wird, indem eine Differenz zwischen einem Höhenwert von einem Fahrzeugsitz des angezeigten virtuellen Kraftfahrzeugs und einem Höhenwert einer Sitzgelegenheit, auf welcher die Person sitzt, gebildet wird. Denn um sich das virtuelle Kraftfahrzeug besonders bequem in der Innenansicht anschauen zu können, kann es vorgesehen sein, dass die Person auf der besagten realen Sitzgelegenheit Platz nehmen kann. Bei dieser Sitzgelegenheit kann es sich beispielsweise um einen Stuhl, um eine Bank oder dergleichen handeln, welche vorzugsweise eine ergonomisch angenehme Sitzhöhe, beispielsweise von 45 cm aufweist. Sollte nun ein virtuelles Kraftfahrzeug mittels der Virtual-Reality-Brille in der Innenansicht angezeigt werden, welches eine niedrigere Sitzposition als die reale Sitzgelegenheit aufweist, so ergibt sich für den Wert des Höhenversatzes ein negativer Wert, da der Wert für den Höhenversatz dadurch gebildet wird, dass eine Differenz zwischen dem Höhenwert des Fahrzeugsitzes des betreffenden angezeigten virtuellen Kraftfahrzeugs und dem Höhenwert der Sitzgelegenheit, auf welcher die Person sitzt, gebildet wird. Dadurch können beispielsweise verschiedenste Höhenwerte für verschiedene Fahrzeugsitze unterschiedlicher Fahrzeugmodelle in einer Speichereinrichtung hinterlegt sein, so dass die entsprechenden Höhenwerte je nach ausgewähltem Fahrzeugmodell abgerufen werden können. Der Höhenwert der realen Sitzgelegenheit kann beispielsweise ebenfalls in dieser Speichereinrichtung hinterlegt sein. Falls die Sitzgelegenheit, auf welcher die Person Platz nehmen kann, höhenverstellbar sein sollte, kann beispielsweise an der Sitzgelegenheit eine Messeinrichtung oder eine Erfassungseinrichtung vorgesehen sein, mittels welcher der Höhenwert der Sitzgelegenheit bei einer Verstellung der Sitzhöhe der Sitzgelegenheit erfassbar ist. Dadurch können jederzeit die passenden Höhenwerte für die betreffende Sitzgelegenheit bereitgestellt werden, so dass der Wert für den Höhenversatz jederzeit zuverlässig ermittelt werden kann.

In weiterer vorteilhafter Ausgestaltung der Erfindung ist es vorgesehen, dass ein Wechsel zurück zur Innenansicht mittels der Virtual-Reality-Brille durchgeführt wird, sobald erfasst wird, dass sich die Person wieder auf die Sitzgelegenheit gesetzt hat. Die Person kann also auf einfache Weise bewirken, sich das betreffende virtuelle Kraftfahrzeug wieder in der Innenansicht anzeigen zu lassen, einfach indem sie sich wieder auf die Sitzgelegenheit niederlässt.

Eine weitere vorteilhafte Ausführungsform der Erfindung sieht vor, dass der Wechsel zurück zur Innenansicht erst dann durchgeführt wird, wenn die Person zusätzlich noch eine vorgegebene Bestätigungshandlung vorgenommen hat. Beispielsweise kann die Person eine Fernbedienung in der Hand halten, welche eine Taste aufweist, wobei erst nach Betätigung dieser Taste der Wechsel zurück zur Innenansicht durchgeführt wird, nachdem sich die Person wieder auf der Sitzgelegenheit niedergelassen hat. Denn es könnte durchaus vorkommen, dass die Person sich das virtuelle Kraftfahrzeug gerne auch sitzend in der Außenansicht anzeigen lassen möchte. Dadurch, dass der Wechsel zurück zur Innenansicht erst dann durchgeführt wird, wenn die Person zusätzlich noch die vorgegebene Bestätigungshandlung vorgenommen hat, ist dies möglich.

Das erfindungsgemäße Virtual-Reality-System umfasst eine Virtual-Reality-Brille, eine Erfassungseinrichtung zum Erfassen einer Höhenposition der Virtual-Reality-Brille und eine Steuereinrichtung, welche dazu eingerichtet ist, die Virtual-Reality-Brille gemäß dem erfindungsgemäßen Verfahren oder gemäß einer vorteilhaften Ausführungsform des erfindungsgemäßen Verfahrens anzusteuern. Vorteilhafte Ausgestaltungen des erfindungsgemäßen Verfahrens sind dabei als vorteilhafte Ausgestaltungen des erfindungsgemäßen Virtual-Reality-Systems anzusehen, wobei das Virtual-Reality-System insbesondere Mittel zur Durchführung der Verfahrensschritte aufweist.

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- Fig.1: eine schematische Darstellung eines Virtual-Reality-Systems, welches eine Virtual-Reality-Brille zum Anzeigen eines virtuellen Kraftfahrzeugs aufweist;
- Fig. 2: eine schematische Darstellung eines Erfassungsraums, in welchem eine Person mit der aufgesetzten Virtual-Reality-Brille einmal sitzend und einmal stehend dargestellt ist;
- Fig. 3: eine Darstellung eines virtuellen Kraftfahrzeugs in Form eines Sportwagens, welcher mittels der von der Person getragenen Virtual-Reality-Brille angezeigt wird; und in
- Fig. 4: eine Darstellung eines weiteren virtuellen Kraftfahrzeugs, welches mittels der von der Person getragenen Virtual-RealityBrille angezeigt wird, wobei es sich bei diesem virtuellen Kraftfahrzeug um einen Geländewagen handelt.

In den Figuren werden gleiche oder funktionsgleiche Elemente mit den gleichen Bezugszeichen versehen.

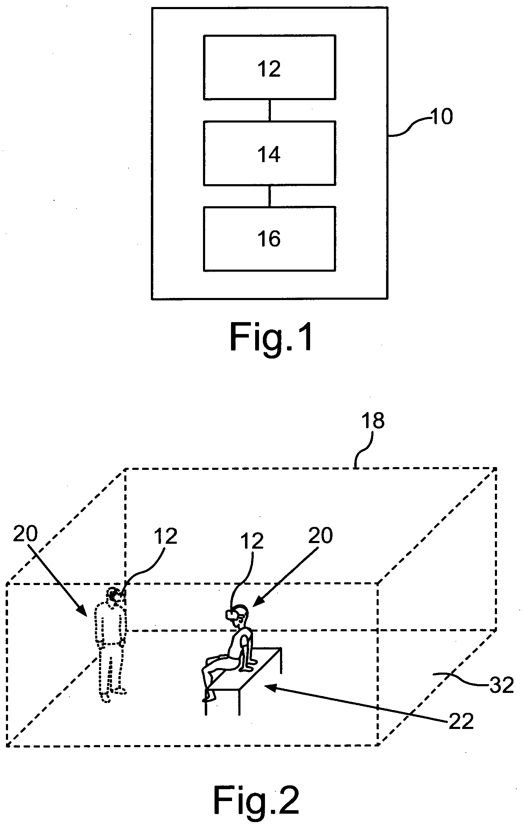

Ein insgesamt mit 10 bezeichnetes Virtual-Reality-System ist in einer schematischen Darstellung in Fig. 1 gezeigt. Das Virtual-Reality-System 10 umfasst eine Virtual-Reality-Brille 12, eine Steuereinrichtung 14 und eine Erfassungseinrichtung 16. Mittels der Virtual-Reality-Brille 12 können unterschiedlichste Fahrzeugmodelle in Form von angezeigten virtuellen Kraftfahrzeugen sowohl in einer Innenansicht als auch in einer Außenansicht angezeigt werden. Die Steuereinrichtung 14 dient dabei zum Ansteuern der Virtual-Reality-Brille 12. Die Erfassungseinrichtung 16 ist dazu ausgelegt, eine Position der Virtual-Reality-Brille 12 zu bestimmen, wobei die Steuereinrichtung 14 dazu ausgelegt ist, eine virtuelle Beobachtungsposition, aus welcher das jeweilige virtuelle Kraftfahrzeug angezeigt wird, entsprechend der gerade erfassten Position der Virtual-Reality-Brille 12 vorzugeben. Die Erfassungseinrichtung 16 ist insbesondere dazu ausgelegt, eine Höhenposition der Virtual-Reality-Brille 12 zu ermitteln.

In Fig. 2 ist ein Erfassungsraum 18 in einer schematischen Perspektivansicht gezeigt, wobei eine Person 20, welche die Virtual-Reality-Brille 12 aufgesetzt hat, einmal stehend und einmal auf einer Sitzeinrichtung 22 sitzend dargestellt ist. Solange sich die Person 20 innerhalb des Erfassungsraums 18 aufhält, kann die Erfassungseinrichtung 16 auf zuverlässige Weise die Position der Virtual-Reality-Brille 12 und somit auch die Position sowie Positionsveränderungen der Person 20 bestimmen. Während der Anzeige eines virtuellen Kraftfahrzeugs mittels der Virtual-Reality-Brille 12 kann die Person 20 also innerhalb des Erfassungsraums 18 beispielsweise umherwandern, um das angezeigte virtuelle Kraftfahrzeug virtuell zu umrunden und aus verschiedensten virtuellen Beobachtungspositionen zu betrachten. Genauso kann die Person 20 aber auch auf der Sitzeinrichtung 22 Platz nehmen, um sich das virtuelle Kraftfahrzeug, welches mittels der Virtual-Reality-Brille 12 angezeigt wird, bequem auf der Sitzeinrichtung 22 sitzend anzuschauen.

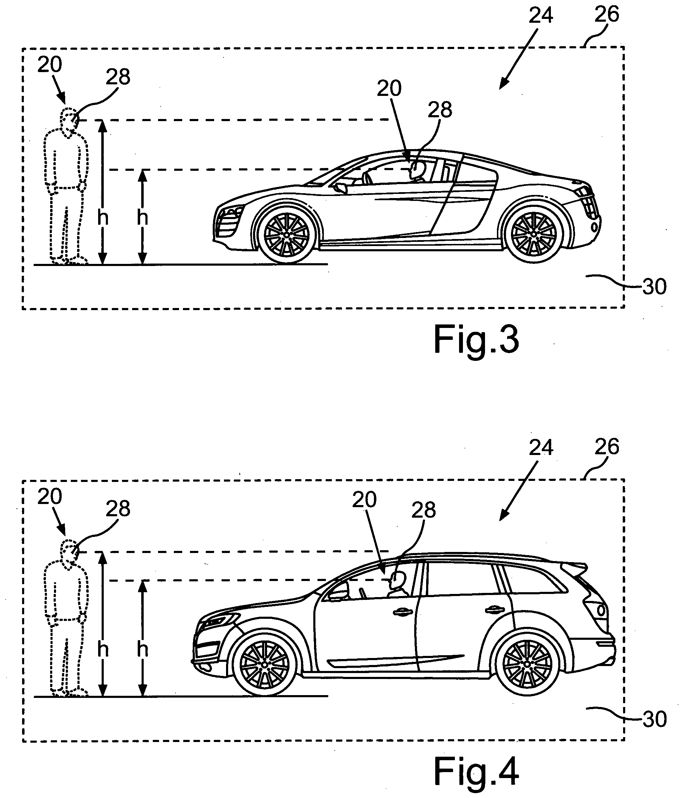

In Fig. 3 ist ein virtuelles Kraftfahrzeug 24 dargestellt, welches mittels der Virtual-Reality-Brille 12 angezeigt wird. Das virtuelle Kraftfahrzeug 24 ist dabei in einer virtuellen Umgebung 26 angeordnet, welche ebenfalls mittels der Virtual-Reality-Brille 12 angezeigt wird. Bei der virtuellen Umgebung 26 kann es sich beispielsweise um einen virtuellen Showroom oder dergleichen handeln. Die Person 20, welche die Virtual-Reality-Brille 12 aufgesetzt hat, ist nur zu Illustrationszwecken in Fig. 3 dargestellt. Wie zu erkennen, sitzt die Person 20 einmal virtuell im Innenraum des virtuellen Kraftfahrzeugs 24 und steht einmal außerhalb vom virtuellen Kraftfahrzeug 24. Eine jeweilige virtuelle Beobachtungsposition 28, aus welcher die Person 20 durch die Virtual-Reality-Brille 12 auf das virtuelle Kraftfahrzeug 24 blickt, ist in Fig. 3 schematisch gekennzeichnet.

Falls das virtuelle Kraftfahrzeug 24 in einer Innenansicht mittels der Virtual-Reality-Brille 12 angezeigt wird, wird eine Höhe h der virtuellen Beobachtungsposition 28 in Abhängigkeit von einer mittels der Erfassungseinrichtung 16 erfassten Höhenposition der Virtual-Reality-Brille 12 und in Abhängigkeit des Modells des gerade angezeigten virtuellen Kraftfahrzeugs 24 vorgegeben. Da es sich im vorliegend gezeigten Fall bei dem angezeigten virtuellen Kraftfahrzeug 24 um einen sehr flachen Sportwagen handelt, sitzt die Person 20 virtuell sehr niedrig in dem virtuellen Kraftfahrzeug 24. Die reale Sitzgelegenheit 22, auf welcher die Person 20 Platz genommen hat, ist dabei höher als der Fahrzeugsitz des als Sportwagen ausgebildeten virtuellen Kraftfahrzeugs 24.

Um dennoch die virtuelle Sitzhöhe bei einer Anzeige des virtuellen Kraftfahrzeugs 24 aus einer Innenansicht besonders realitätsnah zu gestalten, wird ein Höhenversatz zwischen der realen Sitzposition und der virtuellen Sitzposition beim Vorgeben der Höhe der virtuellen Beobachtungsposition 28 berücksichtigt. Der Wert für den besagten Höhenversatz wird vorgegeben, indem eine Differenz zwischen einem Höhenwert vom Fahrzeugsitz des angezeigten virtuellen Kraftfahrzeugs 24 und einem Höhenwert der realen Sitzgelegenheit 22, auf welcher die Person 20 sitzt, gebildet wird. Dafür können beispielsweise Werte für die jeweiligen Höhenpositionen der Sitzflächen der realen Sitzgelegenheit 22 und des virtuellen Fahrzeugsitzes hinterlegt sein. Befinden sich die Augen der Person 20 in der Realität beispielsweise auf einer Höhe von 1,20 m, wenn die Person auf der Sitzgelegenheit 22 sitzt, so kann die Höhe h der virtuellen Beobachtungsposition 28 weitaus niedriger gewählt werden, beispielsweise auf einer Höhe von nur 90 cm, wenn die Person 20 virtuell in dem Innenraum des virtuellen Kraftfahrzeugs 24 sitzt. Beugt sich die Person 20 in der Realität nach unten so beugt sie sich in dem virtuellen Kraftfahrzeug 24 sitzend ebenfalls um dieselbe Wegstrecke nach unten. Die Beobachtungsposition 28 weist dabei lediglich den besagten Höhenversatz zur realen Augenposition der Person 20 auf.

Da die Höhe h der virtuellen Beobachtungsposition 28 an das betreffende Fahrzeugmodell angepasst wird, so lange das virtuelle Kraftfahrzeug 24 mittels der Virtual-Reality-Brille 12 in der Innenansicht dargestellt wird, befindet sich eine virtuelle Bodenfläche 30 der virtuellen Umgebung 26 auch näher an der virtuellen Beobachtungsposition 28 als eine reale Bodenfläche 32 von den Augen der Person 20 beabstandet ist. Verschwenkt die Person 20 ihren Kopf während sie virtuell in dem virtuellen Fahrzeug 24 sitzt, so kann sie beispielsweise aus einem Seitenfenster des virtuellen Kraftfahrzeugs 24 blicken, wobei der virtuelle Boden 30 entsprechend der Höhe h von der Person 20 entfernt angezeigt wird.

Sobald erfasst wird, dass die Person 20 sich von der Sitzgelegenheit 22 erhebt, kann es vorgesehen sein, dass die Virtual-Reality-Brille 12 automatisch derart angesteuert wird, dass das virtuelle Kraftfahrzeug 24 nicht mehr in der Innenansicht sondern stattdessen in einer Außenansicht angezeigt wird, so dass die Person 20 virtuell beispielsweise wie in Fig. 3 angedeutet vor dem virtuellen Kraftfahrzeug 24 steht. Sobald das virtuelle Kraftfahrzeug 24 in der Außenansicht angezeigt wird, wird die Höhe h der virtuellen Beobachtungsposition 28 nur noch in Abhängigkeit von der realen Höhenposition der Virtual-Reality-Brille 12 gewählt. Ist die Person 20 beispielsweise 1,80 m groß, so blickt sie durch die Virtual-Reality-Brille 12 auf das angezeigte virtuelle Kraftfahrzeug 24 in der Außenansicht aus einer entsprechenden Höhe auf das virtuelle Kraftfahrzeug, so als ob sie real vor dem virtuellen Kraftfahrzeug 24 stehen würde. Die Höhe h der virtuellen Beobachtungsposition 28 hängt also in der Außendarstellung des virtuellen Kraftfahrzeugs 24 nur noch davon ab, wie hoch die von der Person 20 getragene Virtual-Reality-Brille 12 gerade in der Realität angeordnet ist.

Sobald sich die Person 20 wieder auf der realen Sitzgelegenheit 22 niederlässt, kann es vorgesehen sein, dass die Virtual-Reality-Brille 12 automatisch so angesteuert wird, dass wiederum ein Wechsel von der Außenansicht zur Innenansicht vorgenommen wird. Alternativ kann es aber auch vorgesehen sein, dass der Wechsel zurück zur Innenansicht erst dann durchgeführt wird, wenn die Person 20 zusätzlich noch eine bestimmte vorgegebene Bestätigungshandlung, beispielsweise die Betätigung einer Fernbedienung oder dergleichen, vorgenommen hat. In letzterem Fall kann die Person 20 sich also auf der Sitzgelegenheit 22 niederlassen, wobei das virtuelle Kraftfahrzeug 24 dann noch weiterhin so lange in der Außenansicht dargestellt wird, bis die Person 20 die vorgegebene Bestätigungshandlung vorgenommen hat. Zur Erfassung, ob die Person 20 auf der Sitzgelegenheit 22 sitzt, kann in der Sitzgelegenheit 22 beispielsweise eine Sitzbelegungssensorik angeordnet sein.

In Fig. 4 ist ein weiteres virtuelles Kraftfahrzeug 32 dargestellt, welches mittels der Virtual-Reality-Brille 12 angezeigt wird. Bei diesem virtuellen Kraftfahrzeug 32 handelt es sich um einen Geländewagen. Wie zu erkennen, sitzt die Person 20 virtuell in dem als Geländewagen ausgebildeten virtuellen Kraftfahrzeug 32 wesentlich höher als in dem in Fig. 3 gezeigten virtuellen Kraftfahrzeug 24, welches ein flacher Sportwagen ist. Dies wird wiederum dadurch erzielt, dass die Höhe h der virtuellen Beobachtungsposition 28 sowohl in Abhängigkeit von der mittels der Erfassungseinrichtung 16 erfassten Höhenposition der Virtual-Reality-Brille 12 als auch in Abhängigkeit vom Fahrzeugmodell des angezeigten virtuellen Kraftfahrzeugs 32 vorgegeben wird, solange das virtuelle Kraftfahrzeug 32 in der Innenansicht angezeigt wird. Die Höhe h der virtuellen Beobachtungsposition 28 ist im Falle des als Geländewagen ausgebildeten virtuellen Kraftfahrzeugs 32 dabei gerade um den Betrag weiter oben angeordnet, wie die Sitzfläche des virtuellen Kraftfahrzeugs 32 höher als die Sitzfläche des virtuellen Kraftfahrzeugs 24 angeordnet ist.

Sobald das virtuelle Kraftfahrzeug 32 in der Außenansicht angezeigt wird, hängt die Höhe h der virtuellen Beobachtungsposition 28 wiederum nur noch davon ab, wie hoch die Virtual-Reality-Brille 12 in der Realität angeordnet ist. In der Außenansicht blickt die Person 20 also sowohl bei der Anzeige des virtuellen Kraftfahrzeugs 24 als auch bei der Anzeige des virtuellen Kraftfahrzeugs 32 aus der selben Höhe h auf die virtuellen Kraftfahrzeuge 24, 32.

## Patentansprüche

1. Verfahren zum Betreiben eines Virtual-Reality-Systems (10), bei welchem mittels einer von einer Person (20) aufgesetzten Virtual-Reality-Brille (12) ein virtuelles Kraftfahrzeug (24, 32) aus einer virtuellen Beobachtungsposition (28) angezeigt wird,
wobei
- falls das virtuelle Kraftfahrzeug (24, 32) in einer Innenansicht angezeigt wird: eine Höhe (h) der virtuellen Beobachtungsposition (28) in Abhängigkeit von einer mittels einer Erfassungseinrichtung (16) erfassten Höhenposition der Virtual-Reality-Brille (12) und in Abhängigkeit vom Fahrzeugmodell des angezeigten virtuellen Kraftfahrzeugs (24, 32) vorgegeben wird;
- falls das virtuelle Kraftfahrzeug (24, 32) in einer Außenansicht angezeigt wird: die Höhe (h) der virtuellen Beobachtungsposition (28) in Abhängigkeit von der erfassten Höhenposition der Virtual-Reality-Brille (12) und unabhängig vom Fahrzeugmodell vorgegeben wird;
- das virtuelle Kraftfahrzeug (24, 32) in der Innenansicht angezeigt wird, solange erfasst wird, dass die Person (20) auf der Sitzgelegenheit (22) sitzt, und ein Wechsel von der Innensicht zur Außenansicht mittels der Virtual-Reality-Brille (12) durchgeführt wird, sobald erfasst wird, dass die Person (20) nicht mehr auf der Sitzgelegenheit (22) sitzt, so dass nach dem Wechsel das virtuelle Kraftfahrzeug (24, 32) in der Außenansicht angezeigt wird;
- **dadurch gekennzeichnet, dass** mittels einer an oder in der Sitzgelegenheit (22) angeordneten Sitzbelegungssensorik erfasst wird, ob die Person (20) auf der Sitzgelegenheit (22) sitzt.

2. Verfahren nach Anspruch 1,
**dadurch gekennzeichnet, dass**
die Höhe (h) der virtuellen Beobachtungsposition (28), aus welcher das virtuelle Kraftfahrzeug (24, 32) in der Innenansicht angezeigt wird, vorgegeben wird, indem zur erfassten Höhenposition der Virtual-Reality-Brille (12) ein in Abhängigkeit vom augenblicklich angezeigten virtuellen Kraftfahrzeug (24, 32) vorgegebener Wert für einen Höhenversatz hinzuaddiert wird.

3. Verfahren nach Anspruch 2,
**dadurch gekennzeichnet, dass**
der Wert für den Höhenversatz vorgegeben wird, indem eine Differenz zwischen einem Höhenwert von einem Fahrzeugsitz des angezeigten virtuellen Kraftfahrzeugs (24, 32) und einem Höhenwert einer Sitzgelegenheit (22), auf welcher die Person (20) sitzt, gebildet wird.

4. Verfahren nach einem der vorhergehenden Ansprüche ,
**dadurch gekennzeichnet, dass**
ein Wechsel zurück zur Innenansicht mittels der Virtual-Reality-Brille (12) durchgeführt wird, sobald erfasst wird, dass sich die Person (20) wieder auf die Sitzgelegenheit (22) gesetzt hat.

5. Verfahren nach einem der vorhergehenden Ansprüche ,
**dadurch gekennzeichnet, dass**
der Wechsel zurück zur Innenansicht erst dann durchgeführt wird, wenn die Person (20) zusätzlich noch eine vorgegebene Bestätigungshandlung vorgenommen hat.

6. Virtual-Reality-System (10), mit einer Virtual-Reality-Brille (12), einer Erfassungseinrichtung (16) zum Erfassen einer Höhenposition der Virtual-Reality-Brille (12), einer Sitzbelegungssensorik und einer Steuereinrichtung (14), welche dazu eingerichtet ist, die Virtual-Reality-Brille (12) gemäß einem Verfahren nach einem der vorhergehenden Ansprüche anzusteuern.

## Claims

1. Method for operating a virtual reality system (10), wherein a virtual motor vehicle (24, 32) is displayed from a virtual observation position (28) by means of a virtual reality headset (12) worn by a person (20),
wherein
- if the virtual motor vehicle (24, 32) is displayed in an interior view: a height (h) of the virtual observation position (28) is predetermined depending on a height position of the virtual reality headset (12) detected by a capture device (16) and depending on the vehicle model of the displayed virtual motor vehicle (24, 32);
- if the virtual motor vehicle (24, 32) is displayed in an exterior view: a height (h) of the virtual observation position (28) is predetermined depending on a height position of the virtual reality headset (12) and independently of the vehicle model;
- the virtual motor vehicle (24, 32) is displayed in the interior view as long as it is detected that the person (20) is sitting on the seating arrangement (22), and a switch from the interior view to the exterior view is carried out by means of the virtual reality headset (12), as soon as it is detected that the person (20) is no longer sitting on the seating arrangement (22), so that after the switching the virtual motor vehicle (24, 32) is displayed in the external view,
**characterised in that**
a seat occupancy sensor system arranged on or in the seating arrangement (22) detects whether the person (20) is sitting on the seating arrangement (22).

2. Method according to claim 1,
**characterised in that**
the height (h) of the virtual observation position (28) from which the virtual motor vehicle (24, 32) is displayed in the interior view is predetermined, wherein a value for a height offset predetermined depending on the currently displayed virtual motor vehicle (24, 32) is added to the detected height position of the virtual reality headset (12).

3. Method according to claim 2,
**characterised in that**
the value for the height offset is predetermined based on a difference between a height value of a vehicle seat of the displayed virtual motor vehicle (24, 32) and a height value of a seating arrangement (22) on which the person (20) is sitting.

4. Method according to any of the preceding claims,
**characterised in that**
a switch back to the interior view is carried out by means of the virtual reality headset (12) as soon as it is detected that the person (20) is again sitting on the seating arrangement (22).

5. Method according to any of the preceding claims,
**characterised in that**
the switch back to the interior view is only carried out if the person (20) has additionally performed a predetermined confirmation action.

6. Virtual reality system (10) comprising a virtual reality headset (12), a detection device (16) for detecting a vertical position of the virtual reality headset (12), a seat occupancy sensor system and a control device (14) which is configured to actuate the virtual reality headset (12) in accordance with a method according to any of the preceding claims.

## Revendications

1. Procédé de fonctionnement d'un système de réalité virtuelle (10), selon lequel un véhicule automobile virtuel (24, 32) est affiché à partir d'une position d'observation virtuelle (28) au moyen de lunettes de réalité virtuelle (12) portées par une personne (20),
dans lequel
- si le véhicule automobile virtuel (24, 32) est affiché dans une vue interne : une hauteur (h) de la position d'observation virtuelle (28) est prescrite en fonction d'une position en hauteur, détectée au moyen d'un dispositif de détection (16), des lunettes de réalité virtuelle (12) et en fonction du modèle de véhicule du véhicule automobile virtuel (24, 32) affiché ;
- si le véhicule automobile virtuel (24, 32) est affiché dans une vue externe : la hauteur (h) de la position d'observation virtuelle (28) est prescrite en fonction de la position en hauteur détectée des lunettes de réalité virtuelle (12) et indépendamment du modèle de véhicule ;
- le véhicule automobile virtuel (24, 32) est affiché dans la vue interne tant qu'on détecte que la personne (20) est assise sur le siège (22) et un changement de la vue interne à la vue externe est effectué au moyen des lunettes de réalité virtuelle (12) dès qu'on détecte que la personne (20) n'est plus assise sur le siège (22) de sorte que, après le changement, le véhicule automobile virtuel (24, 32) est affiché dans la vue externe ;
**caractérisé en ce que** l'on détecte si la personne (20) est assise sur le siège (22) au moyen d'un système capteur d'occupation de siège agencé sur ou dans le siège (22).

2. Procédé selon la revendication 1, **caractérisé en ce que** la hauteur (h) de la position d'observation virtuelle (28) à partir de laquelle le véhicule automobile virtuel (24, 32) est affiché dans la vue interne est prescrite en ajoutant à la position en hauteur détectée des lunettes de réalité virtuelle (12) une valeur, prescrite en fonction du véhicule automobile virtuel (24, 32) affiché à cet instant, pour un décalage en hauteur.

3. Procédé selon la revendication 2, **caractérisé en ce que** la valeur pour le décalage en hauteur est prescrite en formant une différence entre une valeur de hauteur d'un siège de véhicule du véhicule automobile virtuel (24, 32) affiché et une valeur de hauteur d'un siège (22) sur lequel la personne (20) est assise.

4. Procédé selon l'une quelconque des revendications précédentes, **caractérisé en ce qu'**un changement ramenant à la vue interne est effectué au moyen des lunettes de réalité virtuelle (12) dès qu'on détecte que la personne (20) s'est de nouveau assise sur le siège (22).

5. Procédé selon l'une quelconque des revendications précédentes, **caractérisé en ce que** le changement ramenant à la vue interne n'est effectué que lorsque la personne (20) a en outre aussi réalisé une opération de confirmation prescrite.

6. Système de réalité virtuelle (10), avec des lunettes de réalité virtuelle (12), un dispositif de détection (16) destiné à la détection d'une position en hauteur des lunettes de réalité virtuelle (12), un système capteur d'occupation de siège et un dispositif de commande (14) qui est conçu pour commander les lunettes de réalité virtuelle (12) selon un procédé selon l'une quelconque des revendications précédentes.
